# EUROPEAN PATENT SPECIFICATION

(11) **EP 0 606 284 B1**
(45) Date of publication and mention of the grant of the patent: **07.02.1996**
(21) Application number: 92919984.2
(22) Date of filing: 22.09.1992
(51) Int. Cl.: H02H 3/08

(54) **PROTECTION DEVICE FOR SIGNAL AND POWER CARRYING LINE**
SCHUTZSCHALTUNG FUER EINE SIGNAL- UND STARKSTROMLEITUNG
DISPOSITIF DE PROTECTION POUR UNE LIGNE CONDUISANT DES SIGNAUX ET DU COURANT

(30) Priority: 30.09.1991 GB 9120727
(43) Date of publication of application: 20.07.1994
(73) Proprietor: RAYCHEM LIMITED, London, EC4A 1NH (GB)
(72) Inventor: ATKINS, Ian Paul, Swindon, Wiltshire SN2 2SF (GB)
(74) Representative: Benson, John Everett
(86) International application number: GB9201739
(87) International publication number: WO9307666

(56) References cited:
- WO-A-92/07403
- US-A- 4 533 970
- US-A- 4 661 879
- US-A- 4 723 190

## Description

This invention relates to the protection of electrical circuits from overcurrents, for example due to short circuits in the load of the circuit, and in particular, the invention relates to the protection of circuits that carry ac signals together with dc or low frequency ac power.

One important type of circuit that carries both signals and power is that used for cable television. CATV systems usually include one or more coaxial lines, typically 50 or 75 ohm, for carrying the signal from the transmission station to the subscribers' homes, each line being split a number of times so that a large number of subscribers can be served by each line that originates from the transmission station. Since the signal power is reduced each time the line is split, signal amplifiers are installed in the lines at periodic intervals. The power supply for the amplifiers is also carried by the line so that, in addition to the CATV signal having frequencies typically of 10 to 1000 MHz, the line will carry a 10 to 50 V dc or low frequency ac power supply. The CATV system is protected against shorting of the conductors or other faults by means of fuses or bimetal protectors located in the transmission station/distribution point. The fuses are located in the transmission station rather than in the cable because they need to be replaced after they have blown and so must be accessible. Similarly, bimetal protectors are located in the transmission station because they require a controlled environment in order to function correctly and also because their reliability is such that they often need to be replaced. In addition, bimetal protectors cannot be impedance matched to the coaxial cable without them needing to be physically very large which would render them too cumbersome.

Thus the current CATV systems suffer from the problem that if a fault is experienced somewhere in the line, the entire line will stop functioning. Not only is this inconvenient for the subscribers, but it can be difficult and time consuming to trace exactly where the fault occured and cause loss of revenue to the CATV company.

According to one aspect, the present invention provides a module for insertion into a combined signal and power carrying line for protecting a system associated with the line from an overcurrent, which comprises:
(i) a housing having connection ports for cables forming the line and being impedance matched to the line, one of the conductors of the cables being connected together via a capacitor; and
(ii) a solid-state overcurrent protection circuit that is connected across the capacitor via inductors to isolate it from the signal on the line, the protection circuit being capable of switching from a conducting to a blocking state in response to an overcurrent and being capable of resetting itself or attempting to reset itself into its conducting state one or more times after it has switched into its blocking state.

According to a second aspect, the invention provides an electrical system that includes a line that carries both signals and dc or low frequency ac power and is protected from an overcurrent by means of a device inserted in the line that comprises:
(i) a housing that is impedance matched to the line and contains a capacitor that is series connected in one of conductors of the line; and
(ii) a solid-state overcurrent protection circuit that is connected across the capacitor via inductors to isolate it from the signal on the line, the protection circuit being capable of switching from a conducting to a blocking state in response to an overcurrent and being capable of resetting itself or attempting to reset itself into its conducting state one or more times after it has switched into its blocking state.

The module according to the invention has the advantage that it can be located in a line of the system between the source and the load, and a number of such modules may be located at different points in the line. For example, in the case of a CATV system, it would be possible to include one or more modules in association with each splitter in the line if desired. If the line is subjected to an overcurrent, for example due to a short circuit or other fault in the line, the protection device in the nearest module upstream of the fault will switch so that only that part of the line downstream of the module that has switched will be affected. Not only will this considerably reduce the number of subscribers that are affected by the fault, but tracing the fault is much simpler because the section of the line in which the fault occured is known from which protection circuit tripped. Furthermore, if the system is subjected to a overcurrent of short duration the protection circuit will automatically reset after the overcurrent has passed.

The protection device is preferably a two terminal circuit and one which requires no external source of power. The protection circuit need not have a linear response since it is isolated from the signal path. One form of protection circuit that may advantageously be used is that described in our international Patent Application No. WO9207403. The switching circuit preferably comprises a switching transistor that is series connected in the d.c. line, and a control transistor that determines the base or gate voltage of the switching transistor, and whose base or gate voltage depends on the voltage drop across the switching circuit. For example, the control transistor may form one arm of a voltage divider which spans the switching transistor and which sets the base or gate bias of the switching transistor, the control transistor being connected in parallel with the base and emitter or gate and source of the switching transistor. The base or gate bias of the control transistor may also be determined by a voltage divider that spans the switching transistor. In normal operation of this form of switching circuit, when no current passes along the circuit line both the switching and the control transistor are off. As the voltage on the line increases the base or gate forward bias of the switching transistor rises due to the relatively high resistance of the control transistor in its off state, until the switching transistor turns on. In normal operation the arrangement will allow the circuit current to pass with a small voltage drop across the switching transistor of about 1.5 V in the case of an enhancement mode MOSFET or about 0.65 V in the case of a single bipolar junction transistor.

When the line is subjected to an overcurrent, the voltage drop across the switching transistor increases, hence the base or gate forward bias of the control transistor increases until the control transistor turns on, thereby shorting the base and emitter or the gate and source of the switching transistor and turning the switching transistor off. As this occurs the voltage across the switching transistor increases, so increasing the forward bias of the control transistor base or gate and locking the arrangement in the off state even if the overcurrent transient passes.

This form of circuit has the advantage that it does not require any series resistor to be provided in the line of the electrical circuit for determining the existance of an overcurrent, so that the voltage drop across the switching circuit is solely due to the collector-emitter or drain-source voltage drop of the switching transistor. In addition, the absence of a series resistor reduces the number of load current carrying components which allow easier integration of the device.

If the switching circuit has this configuration, a pulse generator is preferably arranged to short the base and emitter or gate and source of the control transistor, thereby turning it off which in turn will turn the switching transistor on. This may be achieved by providing a resetting transistor for "shorting" the base and emitter or gate and source of the control transistor, the base or gate voltage of the resetting transistor being taken from the pulse generator.

The overcurrent protection arrangement may employ bipolar transistors and/or field effect transistors. Where bipolar transistors are used they are preferably used in a Darlington configuration as the switching transistor in order to reduce the base current required when the transistor is switched on. This base current must be supplied via a resistor connected between the base and collector of the switching transistor. When the circuit switches to its blocking state the switching transistor base current is diverted through the control transistor (which is now on) and becomes a leakage current. However, since the voltage drop across the resistor is much higher when the arrangement is in its blocking state, the leakage current is larger than the switching transistor base current. If a Darlington pair or triplet is employed as the switching transistor, the effective d.c. current gain will be increased considerably so that a much higher resistance can be used.

Where field effect transistors are employed, MOSFETS are preferred, for example enhancement mode MOSFETS. The arrangement may be produced as an integrated circuit, in which case the resistors employed in the switching circuit (and in the pulse generator circuit) may be provided by MOSFETs, for example with their gates and drains connected as in NMOS logic. Alternatively, the control transistor and the resistor which together form the voltage divider for the base or gate of the switching transistor may be provided by a complementary n-channel and p-channel pair of FETS connected in the manner of CMOS logic.

Alternatively, the arrangement may employ depletion mode transistors to switch the line current. In this case the switching circuit may employ a JFET for example as described in our copending international Patent Application No. PCT/GB91/01237 Alternatively, a pair of depletion mode MOSFETs connected in series with their sources together may be employed. Such switching circuits are described in US Patent No. 4,533,970 to Brown and in the SIPMOS small-signal transistors brochure 1990 page 32 issued by Siemens AG. The disclosure of these references is incorporated herein by reference.

Any of a number of means may be used to generate the pulses. Especially where a large number of pulses is intended to be generated, for example according to the second aspect of the invention, they may be generated by an astable oscillator known per se. In order to provide a sufficient time delay between the pulses, it may be appropriate for the pulse generator to include a divider whose input is supplied by a relatively fast oscillator, eg. a crystal device or other circuit. Indeed, it may be possible for the user to specify the pulse frequency by selecting the divider output that attempts to reset the switch. If the pulse generator or any other components need a power supply, it is usually simplest to take the supply from the voltage difference across the switch optionally after appropriate voltage regulation, for example by means of a Zener diode.

It may be necessary to modify some of the protection circuits if the line carries ac power, for example by enclosing the circuit within a rectifying bridge or to employ a pair of such circuits in parallel with opposite polarity, each circuit being series connected with a diode so that the two circuits allow different halves of the ac cycle to pass.

The arrangement according to the invention may be formed using discrete components or it may be formed monolithically using well known techniques. Preferably the arrangement is made in monolithic integrated form as such devices more reliable, less expensive and are also smaller. The use of a divider as described above has the advantage that the value of any capacitors in the pulse generator circuit may be significantly smaller than those that would be required in the absence of the divider, thereby making the circuit more suitable for monolithic integration.

Where the module is employed in a CATV system it will normally be designed for connection to coaxial cables. However, the invention is applicable to other systems such as local area networks, broadcast information systems and the like, in which case other transmission lines such as twisted pairs of balanced feeders may be used.

A module in accordance with the present invention will now be described by way of example with reference to the accompanying drawings in which:

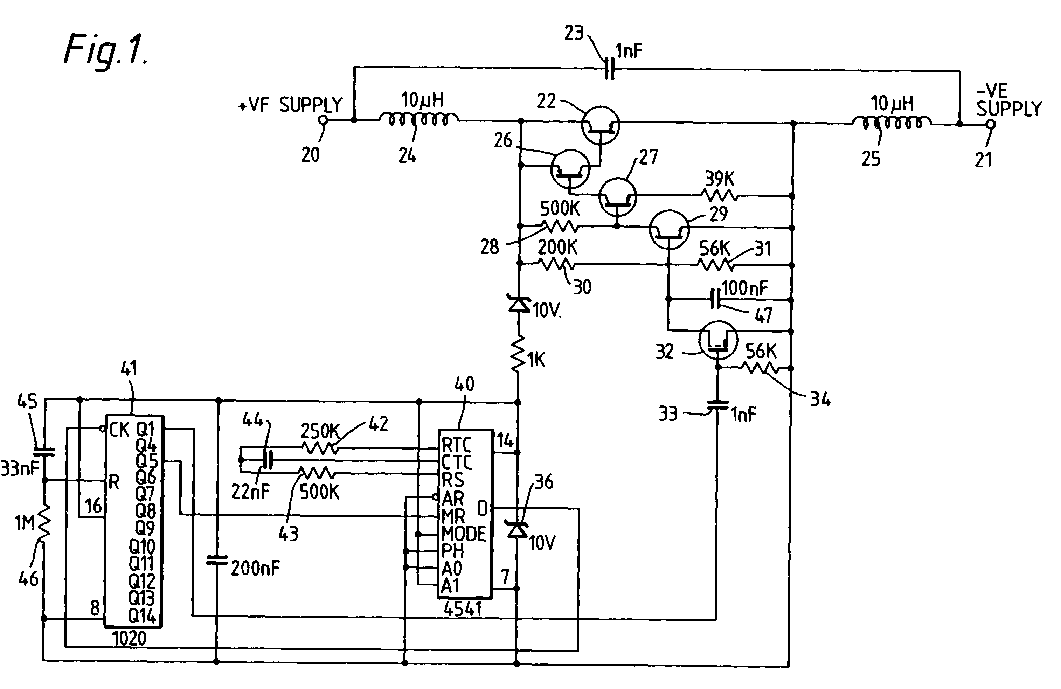

Figure 1 is a circuit diagram of the module; and
Figure 2 is a schematic partly cut-away side view of the module.

Referring to the accompanying drawings a module for insertion into a line of a CATV system for protecting the system against an overcurrent has a pair of terminals 20 and 21 for connection to one of the conductors of the line, the terminals being connected together via a 1nF capacitor 23 to allow the ac signals on the line to pass through the line. A dc protection circuit is connected across the capacitor 23 via a pair of 10 µH inductors 24 and 25 to isolate it from the signals on the line. The protection circuit comprises a pass transistor 22 that is connected between the inductors and is driven by two transistors 26 and 27 that form a complementary Darlington pair. The base of transistor 27 is connected to a voltage divider that spans the pass transistor 22 and comprises a 2.2 Mohm resistor 28 and a control transistor 29, and the base of the control transistor 29 is held in a voltage divider which also spans the pass transistor and is formed from resistors 30 and 31. A resetting FET 32 is connected across the resistor 31 between the base and emitter of the control transistor 29.

A resetting circuit comprises a 4541 programmable timer 40 and a counter 41. The timer 40 is connected so as to generate a pulse about once every 20 seconds and the pulse is fed into the gate of the resetting transistor 32 via a high pass RC filter formed by capacitor 33 and 34. The pulse is also fed into the clock input of the counter 41 and one of the outputs of the counter, in this case the Q5 output, is fed back into the master reset pin of the timer 40. Both the timer 40 and the clock 41 are powered by the voltage appearing across the pass transistor clipped to 10 V by Zener diode 36.

In use, circuit signals will pass through the module via capacitor 23 with very little attenuation while the dc power supply passes through transistor 22. The base current required to keep pass transistor 22 on is supplied by transistors 26 and 27. In normal operation these transistors are also on since the base of transistor 27 is held at its collector voltage by the voltage divider formed by resistor 28 and control transistor 29 which is off.

When an overcurrent is experienced, for example by shorting the conductors of the coax cable, the voltage across the pass transistor 22 increases until the base emitter voltage of control transistor 29 is sufficient to turn it on. This effectively shorts the base-emitter junction of transistor 27 and turns transistors 22, 26 and 27 off.

Since the pass transistor 22 has been turned off, substantially the entire dc voltage drop of the power circuit occurs across the protection circuit, thereby powering timer 40 and counter 41. The timer 40 is programmed by resistors 42 and 43 and capacitor 44 to generate pulses about every 20 seconds which are sent to the gate of the resetting transistor 32. Whenever the resetting transistor 32 receives a pulse it turns on and "shorts" the base-emitter junction of the control transistor 29, thereby turning it off and turning the pass transistor on. If the fault still exists, the pass transistor will turn off again as soon as capacitor 33 has charged up enough.

This process occurs each time timer 40 generates a pulse. However, each timer pulse is fed into the clock input of counter 41, and once eight pulses have been generated by the timer 40 the counter output goes high and disables the timer 40. If the overcurrent in the line has not cleared by this stage the protection circuit will continue to block the dc power in the line until the power is switched off.

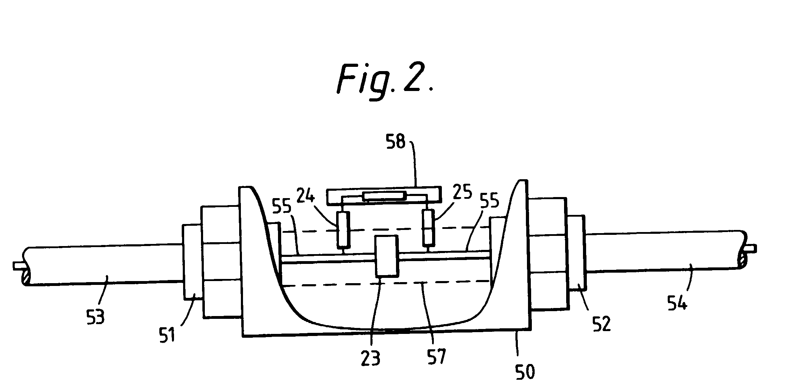

The physical layout of the components of the module is shown in Figure 2. The module comprises an aluminium housing 50 that has a connection piece 51 and 52 at each end thereof for connection to a pair of coax cables 53 and 54 that form a line of a CATV system. The control conductors 55 of the coax cables are connected together via capacitor 23, and are enclosed within a screen 57 that is dimensioned so as to match the impedance of the line. A protection circuit 58 described above either mounted on a pcb or in the form of an integrated circuit is located outside the screen 57 and is connected to the control conductor 55 of the coax cables on either side of the capacitor 23 by means of the inductors 24 and 25.

## Claims

1. A module for insertion into a combined signal and power carrying line for protecting a system associated with the line from an overcurrent, which comprises:
(i) a housing (50) having connection ports (51, 52) for cables forming the line and being impedance matched (57) to the line, one of the conductors of the cables being connected together via a capacitor; and
(ii) a solid-state overcurrent protection circuit (22, 58) that is connected across the capacitor via inductors (24, 25) to isolate it from the signal on the line, the protection circuit being capable of switching from a conducting to a blocking state in response to an overcurrent and being capable of resetting itself or attempting to reset itself into its conducting state one or more times after it has switched into its blocking state.

2. A module as claimed in claim 1, wherein the protection circuit comprises a switching transistor (22) and a control transistor (29) that determines the base or gate voltage of the switching transistor.

3. A module as claimed in claim 2, which includes no resistive components in series with the switching transistor other than the inductor so that the voltage drop across the protection circuit is substantially solely due to the collector-emitter or drain-source voltage drop of the switching transistor.

4. A module as claimed in claim 2 or claim 3, wherein the base or gate voltage is determined by the voltage drop across the switching transistor.

5. A module as claimed in claim 4, wherein the base or gate of the control transistor is held in a voltage divider (30, 31) that spans the switching transistor.

6. A module as claimed in any one of claims 2 to 5, wherein a pulse generator (40-44) is arranged to short the base and emitter or the gate and source of the control transistor when a pulse is generated in order to reset, or attempt to reset, the protection circuit.

7. A module as claimed in claim 6, which includes a resetting transistor (32) for shorting the base and emitter or gate and source of the control transistor, the base or gate voltage of the resetting transistor being taken from the pulse generator.

8. A module as claimed in any one of claims 2 to 7, wherein the switching transistor and/or the control transistor comprises an enhancement mode MOSFET.

9. A module as claimed in any one of claims 1 to 7, wherein the switching transistor comprises a plurality of bipolar junction transistors (22, 26, 27) in a Darlington configuration.

10. A module as claimed in any one of claims 1 to 9, wherein the pulse generator comprises a counter (41) whose input is supplied by an astable oscillator (42-44).

11. An electrical system that includes a line that carries both signals and dc or low frequency ac power and is protected from an overcurrent by means of a device inserted in the line that comprises:
(i) a housing (50) that is impedance matched (57) to the line and contains a capacitor (23) that is series connected in one of conductors of the line; and
(ii) a solid-state overcurrent protection circuit (22, 58) that is connected across the capacitor via inductors (24, 25) to isolate it from the signal on the line, the protection circuit being capable of switching from a conducting to a blocking state in response to an overcurrent and being capable of resetting itself or attempting to reset itself into its conducting state one or more times after it has switched into its blocking state.

12. An electrical system as claimed in claim 11, which includes a plurality of the devices at intervals along the line.

13. An electrical system as claimed in claim 11 or claim 12 which is a CATV system.

## Patentansprüche

1. Modul zum Einsetzen in eine kombinierte signal- und spannungsführende Leitung, um ein der Leitung zugeordnetes System vor einem Überstrom zu schützen, wobei das Modul folgendes aufweist:
(i) ein Gehäuse (50), das Verbindungsöffnungen (51, 52) für Kabel hat, die die Leitung bilden, und an die Leitung widerstandsangepaßt (57) ist, wobei ein Leiter eines Kabels mit einem Leiter eines anderen Kabels über einen Kondensator verbunden ist; und
(ii) eine Überstromschutz-Festkörperschaltung (22, 58), die den Kondensator durch Drosselspulen (24, 25) überbrückt, um ihn von dem Signal auf der Leitung zu trennen, wobei die Schutzschaltung fähig ist, aufgrund eines Überstroms von einem Durchlaßzustand in einen Sperrzustand umzuschalten, und fähig ist, sich selbst einmal oder mehrmals in ihren Durchlaßzustand rückzustellen oder zu versuchen, sich selbst in ihren Durchlaßzustand rückzustellen, nachdem sie in ihren Sperrzustand umgeschaltet hat.

2. Modul nach Anspruch 1, wobei die Schutzschaltung einen Schalttransistor (22) und einen Steuertransistor (29) aufweist, der die Basis- oder Gatespannung des Schalttransistors bestimmt.

3. Modul nach Anspruch 2, das außer der Drosselspule keine Widerstandskomponenten in Reihe mit dem Schalttransistor aufweist, so daß der Spannungsabfall über der Schutzschaltung im wesentlichen ausschließlich auf den Abfall der Kollektor-Emitter- oder Drain-Source-Spannung des Schalttransistors zurückgeht.

4. Modul nach Anspruch 2 oder 3, wobei die Basis- oder Gatespannung durch den Spannungsabfall über dem Schalttransistor bestimmt ist.

5. Modul nach Anspruch 4, wobei die Basis oder das Gate des Steuertransistors in einem Spannungsteiler (30, 31) gehalten wird, der den Schalttransistor überbrückt.

6. Modul nach einem der Ansprüche 2 bis 5, wobei ein Impulsgenerator (40-44) angeordnet ist, um Basis und Emitter oder Gate und Source des Steuertransistors kurzzuschließen, wenn ein Impuls erzeugt wird, um die Schutzschaltung rückzustellen oder um zu versuchen, sie rückzustellen.

7. Modul nach Anspruch 6, das einen Rückstelltransistor (32) aufweist, um Basis und Emitter oder Gate und Source des Steuertransistors kurzzuschließen, wobei die Basis- oder Gatespannung des Rückstelltransistors von dem Impulsgenerator abgenommen wird.

8. Modul nach einem der Ansprüche 2 bis 7, wobei der Schalttransistor und/oder der Steuertransistor einen Anreicherungs-MOSFET aufweist.

9. Modul nach einem der Ansprüche 1 bis 7, wobei der Schalttransistor eine Vielzahl von bipolaren Sperrschichttransistoren (22, 26, 27) in Darlington-Konfiguration aufweist.

10. Modul nach einem der Ansprüche 1 bis 9, wobei der Impulsgenerator einen Zähler (41) aufweist, dessen Eingang von einem astabilen Oszillator (42-44) geliefert wird.

11. Elektrisches System, das eine Leitung aufweist, die sowhl Signale als auch Gleichspannung oder niederfrequente Wechselspannung führt und vor einem Überstrom durch eine in die Leitung eingefügte Vorrichtung geschützt ist, die folgendes aufweist:
(i) ein Gehäuse (50), das an die Leitung widerstandsangepaßt (57) ist und einen Kondensator (23) enthält, der in einen der Leiter der Leitung in Reihe geschaltet ist; und
(ii) eine Überstromschutz-Festkörperschaltung (22, 58), die den Kondensator durch Drosselspulen (24, 25) überbrückt, um ihn von dem Signal auf der Leitung zu trennen, wobei die Schutzschaltung fähig ist, aufgrund eines Überstroms von einem Durchlaßzustand in einen Sperrzustand umzuschalten, und fähig ist, sich selbst einmal oder mehrmals in ihren Durchlaßzustand rückzustellen oder zu versuchen, sich selbst in ihren Durchlaßzustand rückzustellen, nachdem sie in ihren Sperrzustand umgeschaltet hat.

12. Elektrisches System nach Anspruch 11, das in Abständen entlang der Leitung eine Vielzahl der Vorrichtungen aufweist.

13. Elektrisches System nach Anspruch 11 oder Anspruch 12, das ein Kabelfernsehsystem ist.

## Revendications

1. Module à insérer dans une ligne de transmission combinée de signaux et de puissance pour protéger contre une surintensité un système associé à la ligne, qui comporte :
(i) un boîtier (50) ayant des accès de connexion (51, 52) pour des câbles formant la ligne et dont l'impédance (57) est adaptée à la ligne, un condensateur connectant l'un des conducteurs d'un câble au même conducteur de l'autre câble ; et
(ii) un circuit (22, 58) à semiconducteurs de protection contre les surintensités qui est connecté aux bornes du condensateur par l'intermédiaire d'inductances (24, 25) afin d'être isolé du signal présent sur la ligne, le circuit de protection étant capable de commuter d'un état de conduction à un état de blocage en réponse à une surintensité et étant capable de se repositionner de lui-même ou de tenter de se repositionner de lui-même dans son état de conduction, une ou plusieurs fois après qu'il a été commuté dans son état de blocage.

2. Module selon la revendication 1, dans lequel le circuit de protection comporte un transistor (22) de commutation et un transistor (29) de commande qui détermine la tension de base ou de grille du transistor de commutation.

3. Module selon la revendication 2, qui ne comprend aucun composant résistif en série avec le transistor de commutation, autre que l'inductance afin que la chute de tension à travers le circuit de protection ne soit due sensiblement qu'à la chute de tension collecteur-émetteur ou drain-source du transistor de commutation.

4. Module selon la revendication 2 ou la revendication 3, dans lequel la tension de base ou de grille est déterminée par la chute de tension à travers le transistor de commutation.

5. Module selon la revendication 4, dans lequel la base ou la grille du transistor de commande est maintenue dans un diviseur (30, 31) de tension qui est en parallèle avec le transistor de commutation.

6. Module selon l'une quelconque des revendications 2 à 5, dans lequel un générateur (40-44) d'impulsions est monté de façon à court-circuiter la base et l'émetteur ou la grille et la source du transistor de commande lorsqu'une impulsion est générée pour remettre à l'état initial ou tenter de remettre à l'état initial le circuit de protection.

7. Module selon la revendication 6, qui comprend un transistor (32) de remise à l'état initial destiné à court-circuiter la base et l'émetteur ou la grille et la source du transistor de commande, la tension de base ou de grille du transistor de remise à l'état initial étant prise sur le générateur d'impulsions.

8. Module selon l'une quelconque des revendications 2 à 7, dans lequel le transistor de commutation et/ou le transistor de commande comprend un MOSFET à mode d'enrichissement.

9. Module selon l'une quelconque des revendications 1 à 7, dans lequel le transistor de commutation comprend plusieurs transistors à jonctions bipolaires (22, 26, 27) en configuration Darlington.

10. Module selon l'une quelconque des revendications 1 à 9, dans lequel le générateur d'impulsions comprend un compteur (41) dont l'entrée est alimentée par un oscillateur astable (42-44).

11. Système électrique qui comprend une ligne transmettant à la fois des signaux et de la puissance en courant continu ou en courant alternatif à basse fréquence, et qui est protégé d'une surintensité au moyen d'un dispositif inséré dans la ligne, qui comporte :
(i) un boîtier (50) dont l'impédance (57) est adaptée à celle de la ligne et qui contient un condensateur (23) connecté en série dans l'un des conducteurs de la ligne ; et
(ii) un circuit à semiconducteurs (22, 58) de protection contre les surintensités qui est connecté aux bornes du condensateur par l'intermédiaire d'inductances (24, 25) afin d'être isolé du signal présent sur la ligne, le circuit de protection étant capable de commuter d'un état de conduction à un état de blocage en réponse à une surintensité et étant capable de revenir de lui-même ou de tenter de revenir de lui-même dans son état de conduction une ou plusieurs fois après qu'il a été commuté dans son état de blocage.

12. Système électrique selon la revendication 11, qui comprend plusieurs des dispositifs à intervalles le long de la ligne.

13. Système électrique selon la revendication 11 ou la revendication 12, qui est un système de télévision par câble.
